# FASCICULE DE BREVET EUROPEEN

(11) **EP 3 452 308 B1**
(45) Date de publication et mention de la délivrance du brevet: **24.11.2021**
(21) Numéro de dépôt: 17725666.6
(22) Date de dépôt: 25.04.2017
(51) Int. Cl.: B60C 15/02, B60B 21/12

(54) **ADAPTATEUR POUR ENSEMBLE ROULANT ET ENSEMBLE ROULANT LE COMPRENANT**
ADAPTER FÜR EINE ANORDNUNG MIT RÄDERN UND ANORDNUNG MIT RÄDERN DAMIT
ADAPTER FOR A WHEELED ASSEMBLY AND A WHEELED ASSEMBLY COMPRISING SAME

(30) Priorité: 02.05.2016 FR 1653957
(43) Date de publication de la demande: 13.03.2019
(73) Titulaire: Compagnie Générale des Etablissements Michelin, 63000 Clermont-Ferrand (FR)
(72) Inventeur: AHOUANTO, Michel, 63530 ENVAL (FR); TOPIN, Arthur, 63040 CLERMONT-FERRAND CEDEX 9 (FR)
(74) Mandataire: Noel, Luminita
(86) Numéro de dépôt international: PCT/FR2017/050981
(87) Numéro de publication internationale: WO 2017/191390

(56) Documents cités:
- WO-A1-2015/091620
- FR-A1- 3 014 362
- FR-A1- 3 026 054

## Description

L'invention concerne un adaptateur pour ensemble roulant formé principalement d'un pneumatique et d'une jante, et un ensemble roulant comprenant ledit adaptateur.

On rappelle ci-après les définitions utilisées dans la présente invention :
- « direction axiale » : direction parallèle à l'axe de rotation du pneumatique,
- « direction radiale » : direction coupant l'axe de rotation du pneumatique et perpendiculaire à celui-ci,
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement

Dans la demande WO2015091618 il est déjà connu d'insérer, entre la jante et les bourrelets d'un pneumatique, un adaptateur élastique. Cet adaptateur est déformable élastiquement, dans les directions radiale et axiale. Un tel adaptateur permet de dissocier la partie de l'ensemble roulant pouvant être considérée comme travaillant réellement comme un pneumatique, de la partie de l'ensemble roulant pouvant être considérée comme travaillant comme une jante.

Mais si un tel ensemble permet également d'assurer les fonctions d'un pneumatique classique, et notamment une réponse en poussée de dérive du pneumatique suivant l'application d'un angle de dérive au pneumatique qui permet ainsi à l'ensemble une flexibilité suffisante pour lui éviter toute dégradation de surface ou en profondeur, il présente une endurance insuffisante dans la durée à très grande vitesse.

Les documents FR 3 026 054 A1 et FR 3 014 362 A1 décrivent un adaptateur selon le préambule de la revendication 1.

Aussi il subsiste le besoin de disposer d'un nouvel adaptateur qui permette d'assurer une meilleure endurance dans le temps au roulage à de très grande vitesse telle que 250km/h sans dégradation de la structure interne de l'adaptateur.

L'invention a donc pour objet un adaptateur pour ensemble roulant selon la revendication 1.

L'adaptateur selon l'invention présente l'avantage d'être de constitution et de montage simples. L'adaptateur selon l'invention permet par ailleurs, d'assurer un couplage suffisant du fait que les parties de nappe superposées garantissent un couplage suffisant..

Un autre objet de l'invention est un ensemble roulant selon la revendication 5.

L'extrémité axialement extérieure de l'adaptateur délimite, axialement, un « logement destiné à recevoir le bourrelet du pneumatique ». La face d'appui de l'extrémité axialement extérieure sert d'appui, dans le sens axial, au bourrelet du pneumatique à l'instar d'un crochet de jante.

Ainsi le logement reçoit le bourrelet du pneumatique tout comme le fait classiquement le siège d'une jante. Le pneumatique est alors immobilisé axialement par la pression de gonflage, et est plaqué contre la face d'appui de cette extrémité axialement extérieure, à l'instar de ce qui est fait classiquement pour le bourrelet d'un pneumatique contre le crochet de jante d'une jante.

L'extrémité axialement intérieure de l'adaptateur pourrait être dénommée « bourrelet d'adaptateur » puisqu'elle est destinée à accrocher l'adaptateur sur le crochet de jante d'une jante à l'instar de ce qui est fait classiquement par le bourrelet d'un pneumatique.

De préférence, le recouvrement a une longueur « 1 » supérieure ou égale à 0.2L et inférieure ou égale à 0.5L.

De préférence, le recouvrement a une longueur « 1 » inférieur ou égal à 0.6LT.

De préférence, l'armature de renforcement comprend une nappe comprenant des renforts enrobés d'une composition élastomère, lesdits renforts étant parallèle entre eux et formant un angle compris entre 0° et 90° avec la direction circonférentielle. De manière plus préférentiellement, les renforts forment un angle compris entre 30° et 60° avec la direction circonférentielle.

Les renforts peuvent avoir un pas compris entre 0.3 fois le diamètre du renfort et 3 fois le diamètre du renfort.

Les renforts peuvent être choisis parmi les renforts tels que textile (PET, polyester, rayonne), métal ou fibres (carbone, verre)/résine.

Le renfort extérieur disposé à l'extrémité extérieure peut être sensiblement de révolution autour d'un axe et peut comprendre une couche interne et une couche externe comprenant au moins un fil de couche externe enroulé en hélice autour de la couche interne sur plusieurs enroulements circonférentiels, le ou les fils de couche externe comprenant la première partie revêtue par le premier revêtement.

Par enroulement circonférentiel, on entend un enroulement autour de l'axe principal de l'élément de renfort et s'étendant selon la direction circonférentielle autour de cet axe. Le fil de couche externe étant enroulé en hélice autour de la couche externe, chaque enroulement circonférentiel oscille de part et d'autre d'un plan médian (c'est-à-dire passant par le centre de la couche interne) sensiblement perpendiculaire à l'axe de l'élément de renfort.

De préférence, le renfort extérieur comprend une couche intermédiaire comprenant au moins un fil de couche intermédiaire enroulé en hélice autour de la couche interne sur plusieurs enroulements circonférentiels, le ou les fils de couche externe étant enroulés en hélice autour de la couche intermédiaire sur plusieurs enroulements circonférentiels.

Le renfort extérieur peut encore être sensiblement de révolution autour d'un axe et peut comprendre plusieurs enroulements circonférentiels d'au moins un fil agencé axialement les uns à côté des autres sur plusieurs couches radialement superposées les unes sur les autres.

Lorsque l'ensemble monté comprend deux adaptateurs, ces derniers peuvent être symétriques ou non symétriques. La notion de symétrie ou de dissymétrie de l'adaptateur est définie par la longueur axiale du corps de l'adaptateur. Deux adaptateurs sont dissymétriques lorsque le corps de l'un d'entre eux a une longueur axiale plus grande que celle de l'autre.

De préférence, l'ensemble roulant selon l'invention, comprend un premier et un second adaptateur ayant chacun un corps de longueur différente ou identique.

L'invention va maintenant être décrite à l'aide des exemples et des figures qui suivent et qui sont donnés uniquement à titre d'illustration, et dans lesquels :
- la figure 1 représente de manière schématique et en coupe radiale un pneumatique monté sur deux adaptateurs selon l'invention, eux-mêmes encastrés sur la jante de manière démontable.
- La figure 2 représente de manière schématique, en coupe radiale d'un adaptateur non monté, selon l'invention et selon un premier mode de réalisation,
- la figure 3 représente de manière schématique, en coupe radiale d'un adaptateur non monté, selon l'invention et selon un second mode de réalisation,
- la figure 4 représente de manière schématique, en coupe radiale d'un adaptateur non monté, selon l'invention et selon un troisième mode de réalisation,
- la figure 5 représente de manière schématique, en coupe radiale d'un adaptateur non monté, selon l'invention et selon un quatrième mode de réalisation,
- la figure 6 représente de manière schématique, en coupe radiale d'un adaptateur non monté, selon l'invention et selon un cinquième mode de réalisation.

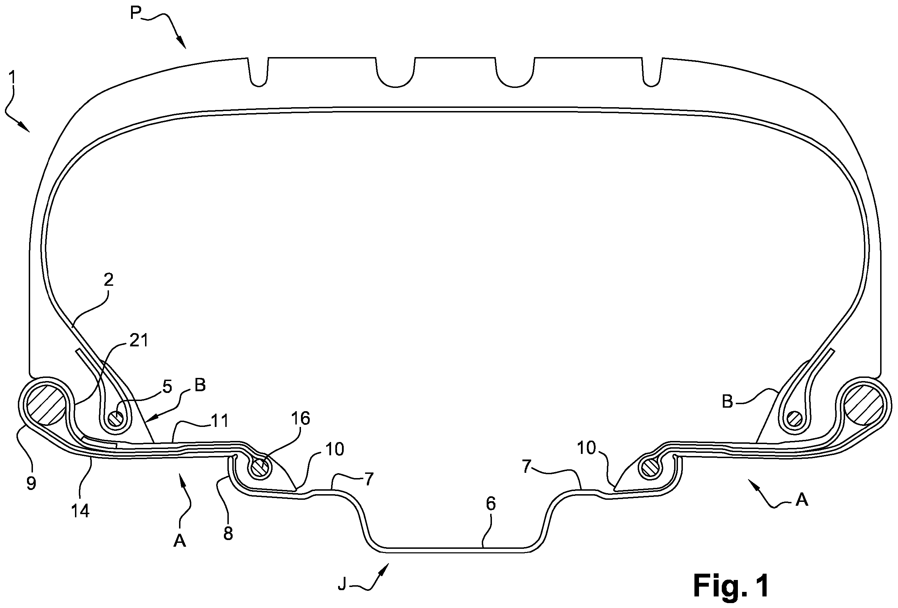

La figure 1 représente un ensemble monté comprenant deux adaptateurs A selon l'invention, reliant les bourrelets B du pneumatique P aux deux crochets de jante 8 de la jante J. Les adaptateurs de cette figure 1 sont démontables par rapport à la jante J et aux bourrelets B du pneumatique.

Le pneumatique de conception en soi inchangée dans l'invention, est formé d'une bande de roulement renforcée par une armature de sommet réunie à deux bourrelets B de part et d'autre d'un plan équatorial XX' par l'intermédiaire de deux flancs 1. Une armature de carcasse 2 renforçant principalement les flancs 1 est ancrée dans chaque bourrelet B à au moins une tringle, ici de type « tressée » 3 pour former des retournements 4, séparés de la partie principale d'armature de carcasse par des profilés de forme quasi-triangulaire 5.

Il est important de noter que l'invention peut être mise en œuvre avec de très nombreux types de pneumatiques, qu'ils soient à carcasse radiale ou diagonale, voire même avec des pneumatiques de type à flancs autoporteurs.

La jante J comprend une gorge 6, dite de montage, et réunissant de part et d'autre du plan équatorial, deux sièges de jante 7 axialement prolongés par des crochets 8 de jante dont les bords radialement extérieurs sont recourbés.

L'adaptateur A comprend principalement une extrémité axialement extérieure 9 ayant un centre C₁, une extrémité axialement intérieure 10 ayant un centre C₂, et un corps 11 connectant ladite extrémité 9 à ladite extrémité 10.

L'extrémité axialement extérieure 9 comprend un élément de renfort extérieur 20. Lors du montage du pneumatique, le siège de bourrelet du bourrelet B s'encastre dans l'espace créée par cet élément de renfort extérieur 20.

L'adaptateur A, disposé au niveau de chaque bourrelet B du pneumatique peut être symétrique ou non symétrique. Par symétrie, on définit que la longueur totale du corps 11 est identique sur les deux adaptateurs. Lorsque l'ensemble (pneumatique, jante et adaptateur) est monté, les bourrelets B du pneumatique sont disposés sur le siège d'adaptateur 14 et mis en appui axial contre une face d'appui 21.

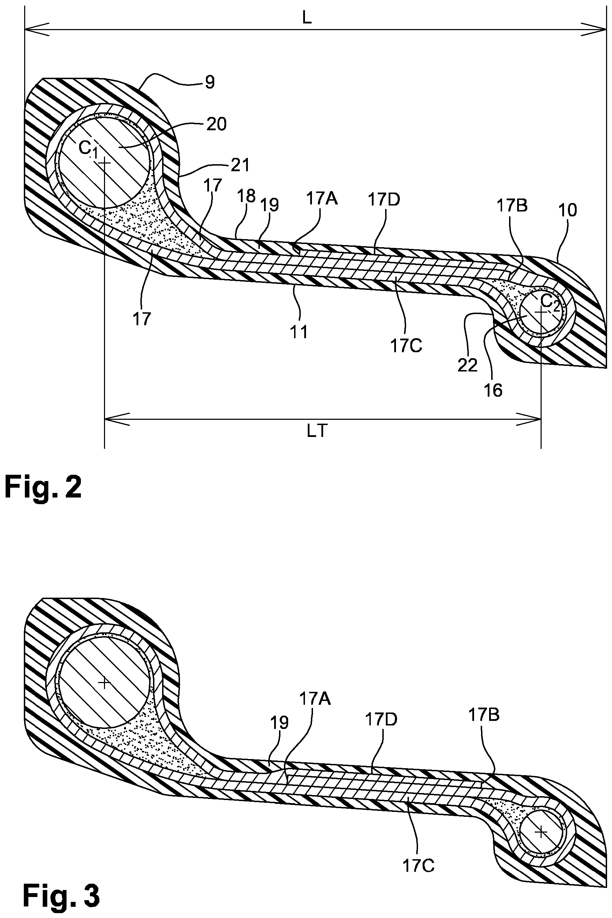

La figure 2 représente un adaptateur selon l'invention, non monté sur jante. Cet adaptateur comprend, d'une part, une extrémité axialement extérieur 9 avec un renfort extérieur 20, de forme géométrique sensiblement sphérique ou polygonale, en coupe, constitué en matériau composite tel que du verre-résine, d'autre part, une extrémité axialement intérieur 10 avec un renfort métallique 16, et enfin un corps 11 comprenant une nappe 17 constituées de câbles textiles et d'élastomère. Les câbles de la nappe sont parallèles entre eux. Ladite nappe 17 est, d'une part, accolée axialement à l'intérieur et radialement à l'extérieur aux parois du renfort 20, et d'autre part, ancrée dans l'extrémité 10 au renfort métallique 16 de manière à former un retournement à chaque extrémité d'adaptateur 9, 10. La nappe 17 comprend une première extrémité 17A et une seconde extrémité 17B. La nappe 17 comprend une partie 17C disposée radialement à l'intérieur d'une partie 17D.

L'adaptateur présente une longueur totale entre chaque extrémité égale à L, et une longueur LT comprise entre les centres C₁ et C₂.

La nappe 17 comprend deux extrémités 17A et 17B disposées l'une sur l'autre de manière à former une zone de recouvrement ayant une longueur totale « 1 » comprise entre 0.2L et 0.5L. La nappe 17 est enrobée de composition élastomère 19 connue.

Le corps 11 comprend un siège d'adaptateur 18 sensiblement cylindrique destiné à recevoir un bourrelet du pneumatique disposé à l'extrémité axialement extérieure du corps 11.

Le corps 11 comprend également une face d'appui 21 d'adaptateur sensiblement comprise dans un plan perpendiculaire à l'axe de rotation, située sur la face axialement intérieure de l'extrémité axialement extérieure, et destiné à maintenir en place le bourrelet dans son logement.

Selon la figure 2, dans la zone de recouvrement, la première extrémité 17A est disposée radialement à l'extérieur de la seconde extrémité 17B. L'extrémité 17B est prise en sandwich entre la partie de nappe 17C et la partie de nappe 17D.

La figure 3 se distingue de la figure 2 en ce que la première extrémité 17A est disposée radialement à l'intérieur de la seconde extrémité 17B. L'extrémité 17A est prise en sandwich entre la partie de nappe 17C et la partie de nappe 17D.

Sur les figures 2 et 3, la zone de recouvrement est disposée radialement à l'extérieur de la partie 17C de la nappe 17.

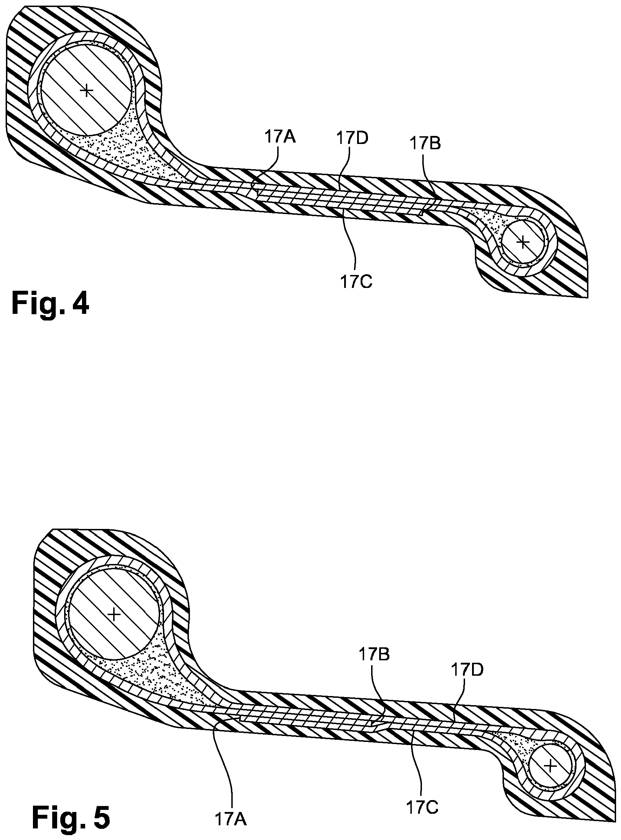

Sur les figures 4 et 5, la zone de recouvrement est disposée radialement à l'intérieur de la partie 17C de la nappe 17.

La figure 4 est le pendant de la figure 3. L'extrémité 17A est prise en sandwich entre la partie de nappe 17C et la partie de nappe 17D.

La figure 5 est le pendant de la figure 2. L'extrémité 17B est prise en sandwich entre la partie de nappe 17C et la partie de nappe 17D.

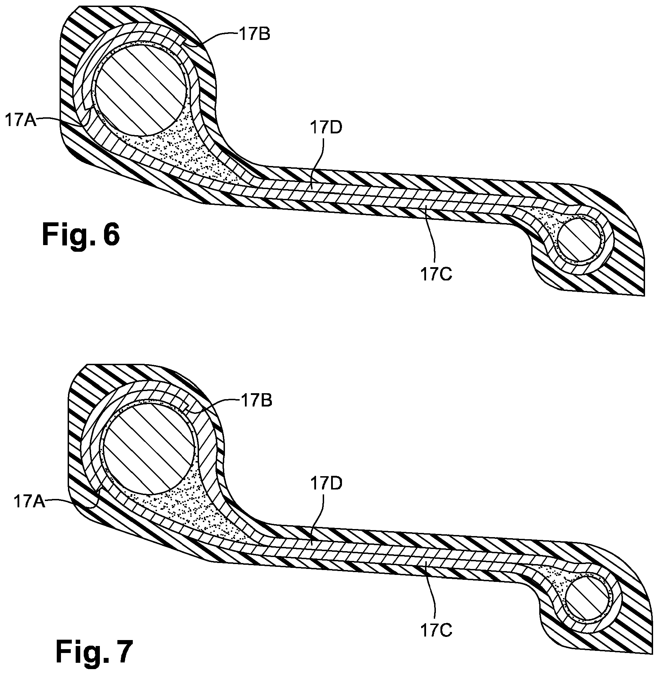

Sur les figures 5 et 6, la zone de recouvrement est disposée radialement à l'élément de renfort extérieur 20. Sur la figure 5, l'extrémité 17A est prise en sandwich entre la partie 17C et l'élément de renfort extérieur 20. Sur la figure 6, l'extrémité 17B est prise en sandwich entre la partie 17D et l'élément de renfort extérieur 20.

L'exemple qui suit montre les résultats obtenus avec l'adaptateur selon l'invention.

### Exemple : Essais endurance à grande vitesse

Cet essai consiste à faire rouler la roue avec une vitesse initiale de 250km/h et d'augmenter cette vitesse de 2km/h pendant 20h pour obtenir une vitesse finale de 290km/h.

Un adaptateur selon l'invention présente une longueur totale L= 65.35mm et une longueur de recouvrement 1=30mm soit 45% de la longueur totale.

On observe qu'une roue équipée d'un tel adaptateur effectue l'essai sans aucun dommage contrairement à une roue comprenant un adaptateur connu sans recouvrement de l'armature de renforcement.

## Revendications

1. Adaptateur pour ensemble roulant ayant un axe de rotation et comprenant :
- un pneumatique (P) ayant deux bourrelets (B),
- une jante (J),
- ledit adaptateur assurant la jonction entre l'un des bourrelets (B) et la jante (J) ladite jante ayant deux sièges de jante (7),
ledit adaptateur ayant :
- une extrémité axialement intérieure (10) destinée à être monté sur le siège de la jante (7) et comprenant un élément de renfort intérieur (16) ledit élément de renfort (16) ayant un centre C₂,
- une extrémité axialement extérieure (9) comprenant un élément de renfort extérieur (20) ledit élément de renfort (20) ayant un centre C₁,
- un corps (11) connectant ladite extrémité extérieure (9) avec ladite extrémité intérieure (10) de manière à former une pièce unitaire et comprenant au moins une armature de renforcement principale assurant la liaison entre ledit renfort extérieur et ledit renfort intérieur et comprenant une première (17A) extrémité et une seconde (17B) extrémité d'une nappe (17),
- un siège d'adaptateur (18) sensiblement cylindrique destiné à recevoir l'un desdits bourrelets (B), ledit siège (18) étant situé à l'extrémité axialement extérieure (9) dudit corps (11),
- une face d'appui (21) d'adaptateur sensiblement comprise dans un plan perpendiculaire à l'axe de rotation, ladite face d'appui étant située sur la face axialement intérieure de l'extrémité axialement extérieure (9), et
- une longueur totale L et une longueur LT comprise entre les centres C₁ et C₂
**caractérisé en ce que** la nappe (17) est accolée axialement à l'intérieur et radialement à l'extérieur aux parois de l'élément de renfort extérieur (20), et ancrée au renfort intérieur (16) de manière à former un retournement à chaque extrémité (9, 10), la nappe de l'armature de renforcement comportant une première extrémité (17A) et une seconde extrémité (17B), extrémités qui sont disposées l'une sur l'autre de manière à former un recouvrement et d'assurer un couplage entre les parties superposées de la nappe (17)..

2. Adaptateur selon la revendication 1, **caractérisé en ce que** le recouvrement a une longueur « 1 » supérieure ou égale à 0.2L et inférieure ou égale à 0.5L.

3. Adaptateur selon la revendication 1, **caractérisé en ce que** le recouvrement a une longueur « 1 » inférieur ou égal à 0.6LT.

4. Adaptateur selon la revendication 1, **caractérisé en ce que** l'armature de renforcement comprend une nappe comprenant des renforts enrobés d'une composition élastomère, lesdits renforts étant parallèle entre eux et formant un angle compris entre 0° et 90° avec la direction circonférentielle.

5. Ensemble roulant ayant un axe de rotation et comprenant :
- un pneumatique (P) ayant deux bourrelets (B),
- une jante (J) ayant deux sièges de jante (7),
- et un adaptateur assurant la jonction entre l'un des bourrelets (B) et la jante (J),
ledit adaptateur ayant :
- une extrémité axialement intérieure (10) destinée à être monté sur le siège de la jante (7) et comprenant un élément de renfort intérieur (16), ) ledit élément de renfort (16) ayant un centre C2,
- une extrémité axialement extérieure (9) comprenant un élément de renfort extérieur (20), ledit élément de renfort (20) ayant un centre C₁,
- un corps (11) connectant ladite extrémité extérieure (9) avec ladite extrémité intérieure (10) de manière à former une pièce unitaire et comprenant au moins une armature de renforcement principale assurant la liaison entre ledit renfort extérieur et ledit renfort intérieur, et comprenant une première (17A) extrémité et une seconde (17B) extrémité d'une nappe (17),
- un siège d'adaptateur (18) sensiblement cylindrique destiné à recevoir l'un desdits bourrelets (B), ledit siège (18) étant situé à l'extrémité axialement extérieure (9) dudit corps (11),
- une face d'appui (21) d'adaptateur sensiblement comprise dans un plan perpendiculaire à l'axe de rotation, ladite face d'appui étant située sur la face axialement intérieure de l'extrémité axialement extérieure (9),
- une longueur totale L et une longueur LT comprise entre les centres C₁ et C₂
**caractérisé en ce que** la nappe (17) est accolée axialement à l'intérieur et radialement à l'extérieur aux parois de l'élément de renfort extérieur (20), et ancrée au renfort intérieur (16) de manière à former un retournement à chaque extrémité (9, 10), la nappe de l'armature de renforcement comportant une première extrémité (17A) et une seconde extrémité (17B), extrémités qui sont disposées l'une sur l'autre de manière à former un recouvrement et d'assurer un couplage entre les parties superposées de la nappe (17).

6. Ensemble roulant selon la revendication 5, **caractérisé en ce que** le recouvrement de l'adaptateur a une longueur « 1 » supérieure ou égale à 0.2L et inférieure ou égale à 0.5L.

7. Ensemble roulant selon la revendication 5, **caractérisé en ce que** le recouvrement de l'adaptateur a une longueur « 1 » inférieur ou égal à 0.6LT.

8. Ensemble roulant selon la revendication 5, **caractérisé en ce que** l'armature de renforcement comprend une nappe comprenant des renforts enrobés d'une composition élastomère, lesdits renforts étant parallèle entre eux et formant un angle compris entre 0° et 90° avec la direction circonférentielle.

## Patentansprüche

1. Adapter für eine rollende Einheit, die eine Drehachse hat und enthält:
- einen Luftreifen (P) mit zwei Wülsten (B),
- eine Felge (J),
- wobei der Adapter die Verbindung zwischen einem der Wülste (B) und der Felge (J) gewährleistet, wobei die Felge zwei Felgensitze (7) hat,
wobei der Adapter hat:
- ein axial inneres Ende (10), das dazu bestimmt ist, auf den Sitz der Felge (7) montiert zu werden und ein inneres Verstärkungselement (16) enthält, wobei das Verstärkungselement (16) eine Mitte C₂ hat,
- ein axial äußeres Ende (9), das ein äußeres Verstärkungselement (20) enthält, wobei das Verstärkungselement (20) eine Mitte C₁ hat,
- einen Körper (11), der das äußere Ende (9) mit dem inneren Ende (10) verbindet, um ein einstückiges Bauteil zu bilden, und der mindestens eine Hauptverstärkungsbewehrung enthält, die die Verbindung zwischen der äußeren Verstärkung und der inneren Verstärkung gewährleistet und ein erstes Ende (17A) und ein zweites Ende (17B) einer Lage (17) enthält,
- einen im Wesentlichen zylindrischen Adaptersitz (18), der dazu bestimmt ist, einen der Wülste (B) aufzunehmen, wobei der Sitz (18) sich am axial äußeren Ende (9) des Körpers (11) befindet,
- eine Adapter-Auflageseite (21), die im Wesentlichen in einer Ebene lotrecht zur Drehachse enthalten ist, wobei die Auflageseite sich auf der axial inneren Seite des axial äußeren Endes (9) befindet, und
- eine Gesamtlänge L und eine Länge LT zwischen den Mitten C₁ und C₂,
**dadurch gekennzeichnet, dass** die Lage (17) axial innen und radial außen an die Wände des äußeren Verstärkungselements (20) angefügt und an der inneren Verstärkung (16) verankert ist, um an jedem Ende (9, 10) einen Umschlag zu bilden, wobei die Lage der Verstärkungsbewehrung ein erstes Ende (17A) und ein zweites Ende (17B) aufweist, Enden, die übereinander angeordnet sind, um eine Überlappung zu bilden und eine Kopplung zwischen den übereinander liegenden Teilen der Lage (17) zu gewährleisten.

2. Adapter nach Anspruch 1, **dadurch gekennzeichnet, dass** die Überlappung eine Länge «1» größer als oder gleich 0,2L und kleiner als oder gleich 0,5L hat.

3. Adapter nach Anspruch 1, **dadurch gekennzeichnet, dass** die Überlappung eine Länge «1» kleiner als oder gleich 0,6LT hat.

4. Adapter nach Anspruch 1, **dadurch gekennzeichnet, dass** die Verstärkungsbewehrung eine Lage enthält, die von einer Elastomerzusammensetzung umhüllte Verstärkungen enthält, wobei die Verstärkungen zueinander parallel sind und einen Winkel zwischen 0° und 90° mit der Umfangsrichtung bilden.

5. Rollende Einheit, die eine Drehachse hat und enthält:
- einen Luftreifen (P) mit zwei Wülsten (B),
- eine Felge (J) mit zwei Felgensitzen (7),
- und einen Adapter, der die Verbindung zwischen einem
der Wülste (B) und der Felge (J) gewährleistet, wobei der Adapter hat:
- ein axial inneres Ende (10), das dazu bestimmt ist, auf den Sitz der Felge (7) montiert zu werden und ein inneres Verstärkungselement (16) enthält, wobei das Verstärkungselement (16) eine Mitte C₂ hat,
- ein axial äußeres Ende (9), das ein äußeres Verstärkungselement (20) enthält, wobei das Verstärkungselement (20) eine Mitte C₁ hat,
- einen Körper (11), der das äußere Ende (9) mit dem inneren Ende (10) verbindet, um ein einstückiges Bauteil zu bilden, und der mindestens eine Hauptverstärkungsbewehrung enthält, die die Verbindung zwischen der äußeren Verstärkung und der inneren Verstärkung gewährleistet, und ein erstes Ende (17A) und ein zweites Ende (17B) einer Lage (17) enthält,
- einen im Wesentlichen zylindrischen Adaptersitz (18), der dazu bestimmt ist, einen der Wülste (B) aufzunehmen, wobei der Sitz (18) sich am axial äußeren Ende (9) des Körpers (11) befindet,
- eine Adapter-Auflageseite (21), die im Wesentlichen in einer Ebene lotrecht zur Drehachse enthalten ist, wobei die Auflageseite sich auf der axial inneren Seite des axial äußeren Endes (9) befindet,
- eine Gesamtlänge L und eine Länge LT zwischen den Mitten C₁ und C₂,
**dadurch gekennzeichnet, dass** die Lage (17) axial innen und radial außen an die Wände des äußeren Verstärkungselements (20) angefügt und an der inneren Verstärkung (16) verankert ist, um an jedem Ende (9, 10) einen Umschlag zu bilden, wobei die Lage der Verstärkungsbewehrung ein erstes Ende (17A) und ein zweites Ende (17B) aufweist, Enden, die übereinander angeordnet sind, um eine Überlappung zu bilden und eine Kopplung zwischen den übereinander liegenden Teilen der Lage (17) zu gewährleisten.

6. Rollende Einheit nach Anspruch 5, **dadurch gekennzeichnet, dass** die Überlappung des Adapters eine Länge «1» größer als oder gleich 0,2L und kleiner als oder gleich 0,5L hat.

7. Rollende Einheit nach Anspruch 5, **dadurch gekennzeichnet, dass** die Überlappung des Adapters eine Länge «1» kleiner als oder gleich 0,6LT hat.

8. Rollende Einheit nach Anspruch 5, **dadurch gekennzeichnet, dass** die Verstärkungsbewehrung eine Lage enthält, die von einer Elastomerzusammensetzung umhüllte Verstärkungen enthält, wobei die Verstärkungen zueinander parallel sind und einen Winkel zwischen 0° und 90° mit der Umfangsrichtung bilden.

## Claims

1. Adapter for a rolling assembly having an axis of rotation and comprising:
- a tyre (P) having two beads (B),
- a rim (J),
- the said adapter providing the connection between one of the beads (B) and the rim (J),
the said rim having two rim seats (7),
the said adapter having:
- an axially inner end (10) intended to be mounted on the rim seat (7) and comprising an inner reinforcing element (16), the said reinforcing element (16) having a centre C₂,
- an axially outer end (9) comprising an outer reinforcing element (20), the said reinforcing element (20) having a centre C₁,
- a body (11) that connects the said outer end (9) to the said inner end (10) so as to form a single piece and comprises at least one main reinforcement that provides the connection between the said outer reinforcer and the said inner reinforcer, and comprises a first end (17A) and a second end (17B) of a ply (17),
- a substantially cylindrical adapter seat (18) intended to receive one of the said beads (B), the said seat (18) being situated at the axially outer end (9) of the said body (11),
- an adapter bearing face (21) substantially contained in a plane perpendicular to the axis of rotation, the said bearing face being situated on the axially inner face of the axially outer end (9), and
- an overall length L and a length LT measured between the centres C₁ and C₂,
**characterized in that** the ply (17) is attached axially on the inside and radially on the outside to the walls of the outer reinforcement element (20), and anchored to the inner reinforcement (16) so as to form an upturn at each end (9, 10), the ply of the reinforcement comprising a first end (17A) and a second end (17B) which are arranged one upon the other so as to form an overlap and to and to ensure a coupling between the superposed portions of the ply (17).

2. Adapter according to Claim 1, **characterized in that** the overlap has a length « 1 » greater than or equal to 0.2L and less than or equal to 0.5L.

3. Adapter according to Claim 1, **characterized in that** the overlap has a length « 1 » less than or equal to 0.6LT.

4. Adapter according to Claim 1, **characterized in that** the reinforcement comprises a ply comprising reinforcers coated in an elastomer composition, the said reinforcers being mutually parallel and making an angle comprised between 0° and 90° with the circumferential direction.

5. Rolling assembly having an axis of rotation and comprising:
- a tyre (P) having two beads (B),
- a rim (J) having two rim seats (7),
- and an adapter providing the connection between one of the beads (B) and the rim (J),
the said adapter having:
- an axially inner end (10) intended to be mounted on the rim seat (7) and comprising an inner reinforcing element (16), the said reinforcing element (16) having a centre C₂,
- an axially outer end (9) comprising an outer reinforcing element (20), the said reinforcing element (20) having a centre C₁,
- a body (11) that connects the said outer end (9) to the said inner end (10) so as to form a single piece and comprises at least one main reinforcement that provides the connection between the said outer reinforcer and the said inner reinforcer, and comprises a first end (17A) and a second end (17B) of a ply (17),
- a substantially cylindrical adapter seat (18) intended to receive one of the said beads (B), the said seat (18) being situated at the axially outer end (9) of the said body (11),
- an adapter bearing face (21) substantially contained in a plane perpendicular to the axis of rotation, the said bearing face being situated on the axially inner face of the axially outer end (9),
- an overall length L and a length LT measured between the centres C₁ and C₂,
**characterized in that** the ply (17) is attached axially on the inside and radially on the outside to the walls of the outer reinforcement element (20), and anchored to the inner reinforcement (16) so as to form an upturn at each end (9, 10), the ply of the reinforcement comprising a first end (17A) and a second end (17B) which are arranged one upon the other so as to form an overlap and to and to ensure a coupling between the superposed portions of the ply (17).

6. Rolling assembly according to Claim 5, **characterized in that** the overlap of the adapter has a length « 1 » greater than or equal to 0.2L and less than or equal to 0.5L.

7. Rolling assembly according to Claim 5, **characterized in that** the overlap of the adapter has a length « 1 » less than or equal to 0.6LT.

8. Rolling assembly according to Claim 5, **characterized in that** the reinforcement comprises a ply comprising reinforcers coated in an elastomer composition, the said reinforcers being mutually parallel and making an angle comprised between 0° and 90° with the circumferential direction.
